Europäisches Patentamt

European Patent Office

Office européen des brevets

(19)

(11) Numéro de publication : **0 338 869 B1**

(12) **FASCICULE DE BREVET EUROPEEN**

(45) Date de publication du fascicule du brevet :
21.11.91 Bulletin 91/47

(51) Int. Cl.⁵ : **F02K 1/70**

(21) Numéro de dépôt : **89400501.6**

(22) Date de dépôt : **23.02.89**

(54) Inverseur de poussée de turboréacteur.

(30) Priorité : **25.02.88 FR 8802283**

(43) Date de publication de la demande :
**25.10.89 Bulletin 89/43**

(45) Mention de la délivrance du brevet :
**21.11.91 Bulletin 91/47**

(84) Etats contractants désignés :
**DE FR GB**

(56) Documents cités :
**FR-A- 2 486 153
FR-A- 2 506 843
FR-A- 2 559 838
GB-A- 1 177 864
US-A- 3 612 401
US-A- 3 747 855**

(73) Titulaire : **HISPANO-SUIZA Société anonyme dite:**
**333, Bureaux de la Colline**
**F-92213 Saint Cloud (FR)**

(72) Inventeur : **Dubois, Claude Achille, Germain**
**1, Rue du Parc Gonfreville l'Orcher**
**F-76700 - Honfleur (FR)**
Inventeur : **Gely, Jean-Marie, Louis**
**154, Boulevard Clémenceau**
**F-76000 - Le Havre (FR)**
Inventeur : **Vauchel, Guy, Bernard**
**316, Rue Pierre Mendès France**
**F-76610 - Le Havre (FR)**

(74) Mandataire : **Moinat, François et al**
**S.N.E.C.M.A. Service des Brevets Boîte**
**Postale 81**
**F-91003 Evry Cédex (FR)**

EP 0 338 869 B1

Jouve, 18, rue Saint-Denis, 75001 PARIS

## Description

La présente invention concerne un inverseur de poussée de turboréacteur à double flux.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

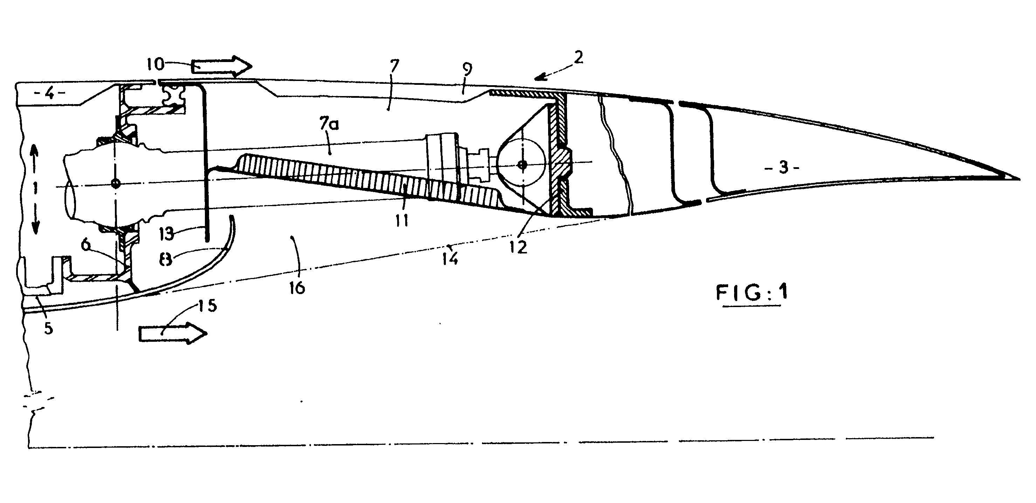

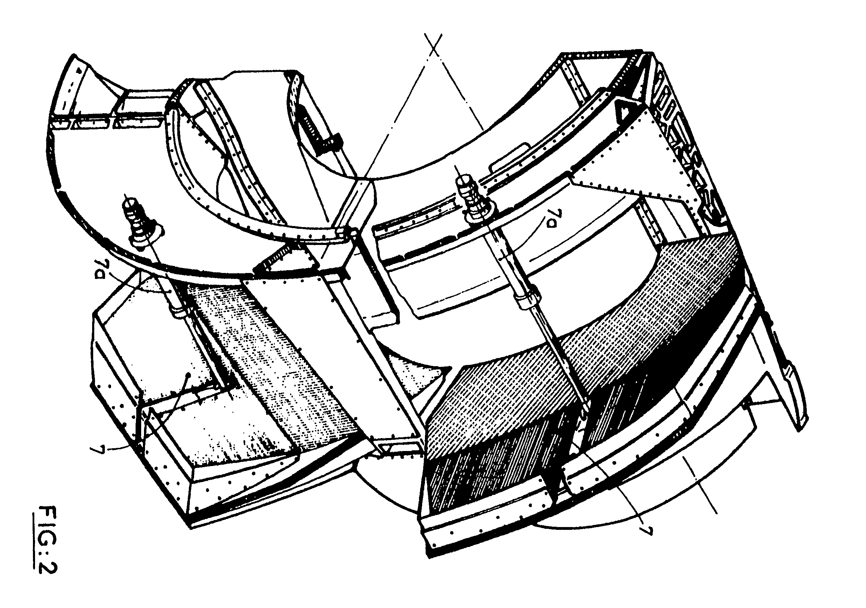

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 limitant extérieurement la veine du flux secondaire et un cadre avant 6 qui assure la jonction desdits panneaux 4 et 5. Ledit cadre avant 6 sert également de support au dispositif de commande des déplacements de la partie mobile 2 qui est essentiellement composée d'un certain nombre d'éléments déplaçables, ou obstacles communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion. La figure 2 montre, selon une vue partielle en perspective d'un tel inverseur de poussée, un exemple de réalisation dans une application comportant quatre portes 7 dont deux sont visibles sur la vue partielle. Chaque porte 7 est associée à un moyen de commande des déplacements tels qu'un vérin 7a.

En aval, amont et aval étant définis par rapport au sens normal de circulation des gaz en poussée directe, la partie fixe 1 se termine par un bord de déviation 8, fixé sous le cadre avant 6 et destiné à assurer une orientation adéquate de l'écoulement, en position d'inversion de poussée. Chaque porte 7 est composée d'un panneau externe 9 venant se placer en position jet direct dans le prolongement du panneau externe 4 de la partie fixe amont 1 pour constituer la paroi aérodynamique continue limitant le flux extérieur au moteur représenté par la flèche 10, d'un panneau interne 11 et d'une structure intérieure 12, assurant la liaison entre les panneaux 9 et 11. La porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte 7 un déflecteur 13 constitué d'une partie frontale associée ou non à des parties latérales. Afin que la porte 7, en position ouverte d'inversion de poussée, assure des performances suffisantes, il est habituellement nécessaire, comme dans l'exemple connu représenté à la figure 1, que la partie avant du panneau interne 11 s'écarte, dans une direction radiale extérieure, d'une surface théorique représentée par la ligne 14, correspondant à une enveloppe théorique de délimitation aérodynamique continue parfaite de la veine du flux secondaire des gaz, représenté par la flèche 15. Une cavité 16 se trouve ainsi formée du côté intérieur de la porte 7 lorsqu'elle se trouve en position fermée correspondant à la poussée directe, délimitée, à l'avant, par le déflecteur 13 de porte et par le bord de déviation 8 de la partie fixe amont 1, du côté externe, par la partie avant du panneau interne 11 de porte et du côté radialement interne, par ladite surface théorique 14. Une partie du flux est forcée par le bord de déviation 8 dans ladite cavité 16, créant ainsi une distorsion du flux et des perturbations dans les écoulements. Il en résulte des pertes aérodynamiques qui sont néfastes au fonctionnement en poussée directe.

D'autres exemples de réalisations du type d'inverseur de poussée de turboréacteur à portes basculantes sont décrits notamment par FR-A-2486153, FR-A-2506843 et FR-A2559838. Aucune solution pleinement satisfaisante n'a toutefois été proposée pour une amélioration du profil de veine correspondant à une enveloppe aérodynamique de veine correcte en fonctionnement de poussée directe. Notamment une solution tendant à réduire le volume de la cavité 16 décrite ci-dessus en référence à la figure 1 en rapprochant la face interne de la partie avant du panneau interne 11 de la porte 7 de la ligne théorique 14 au moyen d'une réduction de la longueur du déflecteur 13 de porte a pour conséquence de réduire l'efficacité lors du fonctionnement en inversion de poussée, ce qui peut devenir inacceptable. Une autre solution, décrite par FR-A-2618853 (publié le 03.02.89) propose d'annuler, ou tout au moins de réduire considérablement, la cavité 16 tout en conservant, en position d'inversion de poussée, un déflecteur 13 de longueur suffisante pour obtenir les performances requises. La mise en oeuvre d'une telle solution doit cependant conduire à des aménagements relativement complexes et impose des mises au point sur un ensemble mobile devant remplir plusieurs fonctions déterminées qui est la porte d'inverseur.

Par suite, le but de l'invention est d'apporter une solution à ces problèmes en conciliant les facilités de mise en oeuvre, tenant compte des impératifs de masse minimale et de coût réduit, avec l'obtention des performances requises, aussi bien lors du fonctionnement en poussée directe, sans pertes aérodynamiques, que lors du fonctionnement en inversion de poussée.

Ces buts sont atteints, conformément à l'invention, par un inverseur de poussée du type précité à obstacles susceptibles de dévier le flux secondaire d'un turboréacteur à double flux caractérisé en ce qu'un élément formant une lèvre est placé à la base du bord de déviation dans la position correspondant à la poussée directe, de manière à assurer une orientation optimale du flux sans rupture, ni perturbations sur la paroi externe de la veine de flux secondaire et en ce que ladite lèvre est associée, d'une part, à des moyens articulés de fixation sur la partie fixe amont d'inverseur et, d'autre part, à des moyens de liaison aux moyens de commande des déplacements de la partie mobile de l'inverseur, de manière à écarter, lorsque l'inverseur de poussée se trouve en position d'inversion, ladite lèvre dudit bord de déviation qui assure ainsi le profil aérodynamique optimal de veine du flux inversé.

Avantageusement, ladite lèvre est portée par deux supports mobiles, en forme de levier dont l'extrémité est articulée respectivement sur un support fixe qui est lui-même fixé sur le cadre avant de la partie fixe amont d'inverseur. En outre, la lèvre est solidaire de deux leviers, chacun relié par une bielle articulée à un pivot solidaire du vérin de commande des déplacements de la partie mobile de l'inverseur.

D'autres caractéristiques et avantages de l'invention seront mieux compris à la lecture de la description qui va suivre d'un mode de réalisation de l'invention, en référence aux dessins annexés sur lesquels :

— la figure 1 représente une demi-vue schématique en coupe longitudinale par un plan passant par l'axe de rotation d'un turboréacteur, d'un inverseur de poussée à portes basculantes, en position fermée, d'un type connu et qui a fait précédemment l'objet d'une description ;

— la figure 2 représente une vue partielle en perspective de l'inverseur de poussée représenté à la figure 1, en position déployée ;

— la figure 3 représente une demi-vue schématique partielle en coupe longitudinale, suivante la ligne III-III de la figure 5, par un plan passant par l'axe de rotation du turboréacteur, analogue à celle de la figure 1, d'un inverseur de poussée suivant un mode de réalisation conforme à l'invention, dans une position fermée ;

— la figure 4 représente, dans une vue analogue à celle de la figure 3, la partie d'inverseur de poussée représenté sur la figure 3, dans une position déployée ;

— la figure 5 représente, selon une vue de l'arrière de la figure 3, la partie d'inverseur de poussée représentée à la figure 3.

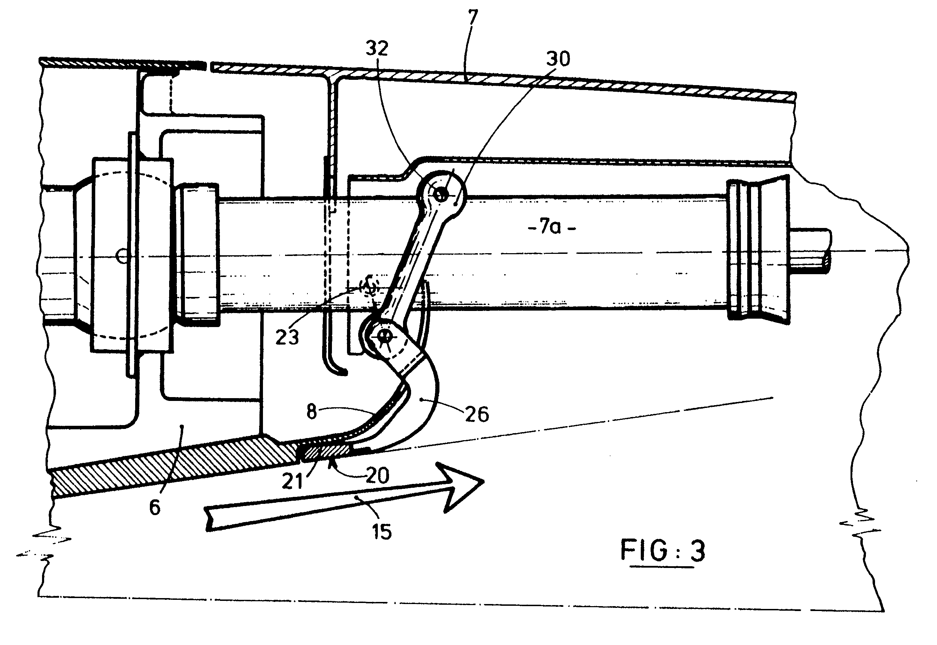

L'inverseur de poussée de turboréacteur à double flux représenté sur les figures 3 à 5, dans un mode de réalisation conforme à l'invention, comporte les ensembles principaux et éléments qui ont été précédemment décrits en référence aux figures 1 et 2 dans un exemple connu de réalisation et on conservera pour des éléments identiques ou correspondants les mêmes références de désignation. L'inverseur de poussée comporte ainsi notamment la partie fixe amont 1 composée du panneau externe 4 de nacelle, du panneau interne 5 délimitant extérieurement la veine du flux secondaire représenté par la flèche 15, panneau dont l'extrémité aval est prolongée par le bord de déviation 8 et du cadre avant 6 qui forme le support du vérin 7a et également la partie mobile 2 constituée des portes basculantes 7.

Conformément à l'invention, la surface théorique 14 qui constitue, de manière analogue à ce qui a été précédemment décrit dans l'exemple connu de réalisation en référence à la figure 1, l'enveloppe aérodynamique externe théorique de la veine secondaire est matérialisée à son extrémité amont par la face radialement interne 20 d'un élément formant une lèvre 21 qui vient se placer, dans la position correspondant à la poussée directe représentée à la figure 3, à la base dudit bord de déviation 8. Les perturbations aérodynamiques créées précédemment sur la paroi externe de veine de flux secondaire sont évitées au moyen de cette lèvre 21 qui canalise le flux secondaire et évite la pénétration dans la cavité 16 de manière que la paroi externe réelle de veine secondaire soit confondue avec la surface théorique 14. Ces résultats ont été confirmés par des essais réalisés en soufflerie qui ont montré, par rapport à la solution antérieure comme représenté aux figures 1 et 2, utilisant un bord de déviation 8 incurvé sans élément correcteur à la base, une nette amélioration des performances lors du fonctionnement en poussée directe provenant d'une sensible amélioration du profil externe de veine secondaire, obtenue grâce à ladite lèvre 21.

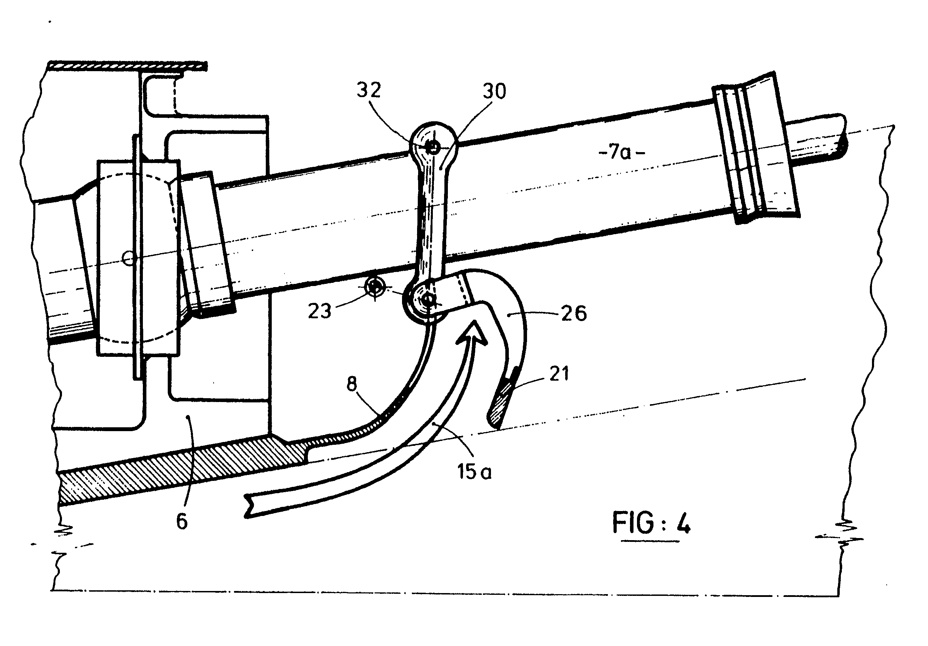

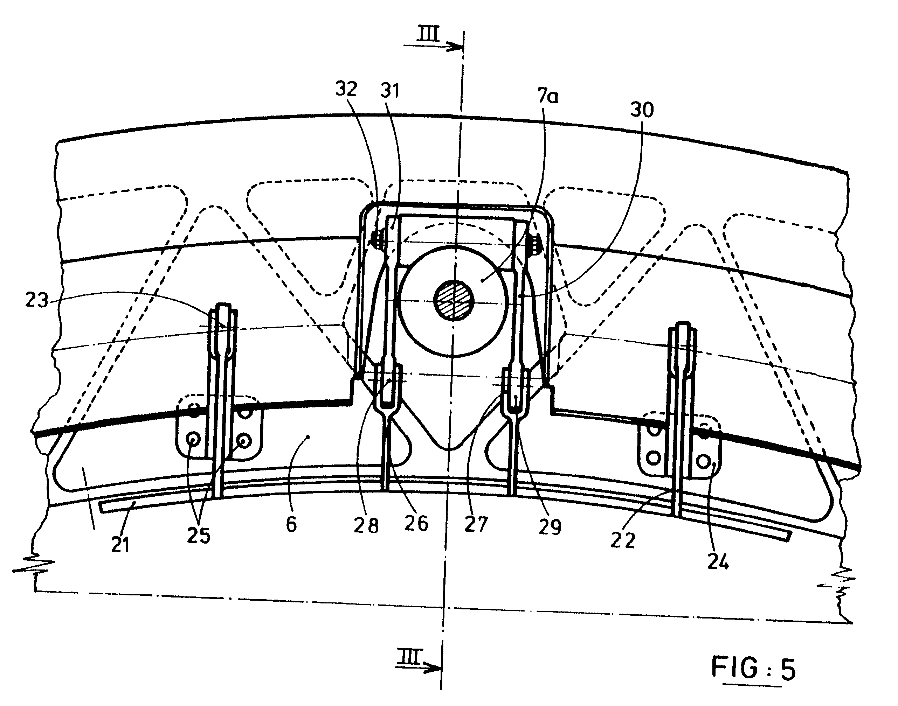

Par contre, l'adjonction d'une telle lèvre 21, si elle était conservée fixe dans la position à la base du bord de déviation 8 qui vient d'être décrite en référence à la figure 3, conduirait dans les phases de fonctionnement avec inversion du flux, représentées sur la figure 4 à une réduction considérable des performances d'inversion. Pour y remédier, l'invention prévoit de rendre, de manière remarquable, ladite lèvre 21 mobile et notamment d'écarter la lèvre 21 du bord de déviation 8 qui présente, en l'absence de ladite lèvre 21, un profil incurvé adapté à l'obtention des performances optimales d'inversion en donnant les meilleures caractéristiques aérodynamiques au flux inversé, symbolisé par la flèche 15a. Dans ce but, la lèvre 21, comme cela ressort également de la représentation donnée à la figure 5, est portée par deux supports mobiles 22, en forme de leviers, convenablement écartés l'un de l'autre. L'extrémité de chaque levier-support 22 est articulé au moyen d'un axe 23 à une extrémité d'un support fixe 24 dont l'autre extrémité est fixée par tout moyen connu, tel que vis ou rivets 25, sur le cadre avant 6 de la partie fixe amont 1 de l'inverseur. En outre, ladite lèvre 21 est solidaire de deux leviers 26, chacun terminé par une chape femelle 27 qui coopère, de manière articulée, au moyen d'un axe rotatif 28 avec une extrémité 29 d'une bielle 30 dont l'autre extrémité 31 est articulée sur un pivot 32 qui est lui-même solidaire du vérin 7a de commande des déplacements de la porte basculante 7. De cette manière, lors du déploiement de la porte 7 sous l'action du vérin 7a, pour passer en position d'inversion de flux, telle que représentée à la figure 4, la variation de position du corps du vérin 7a entraîne le déplacement du pivot solidaire 32 qui entraîne par l'intermédiaire des bielles 30 et des leviers 26 le déplacement de la lèvre 21 dans la position indiquée sur la figure 4, écartée du bord de déviation 8, position où les perturbations aérodynamiques occasionnées au flux inversé par la lèvre deviennent très minimes et sans répercussion significative sur les performances d'inversion.

## Revendications

1. Inverseur de poussée de turboréacteur à double flux comportant une partie amont (1) dont la partie radialement interne est prolongée vers l'aval par un bord de déviation (8) et une partie mobile comportant des obstacles de déviation, notamment des portes basculantes (7) susceptibles en position fermée de s'intégrer dans la paroi extérieure du canal annulaire du flux secondaire, et, en position déployée, de dévier ledit flux secondaire, chaque porte (7) étant associée à des moyens de commande des déplacements, tels qu'un vérin (7a), ledit bord de déviation étant notamment fixé sous un cadre avant (6) de liaison entre un panneau externe (4) et un panneau interne (5) de ladite partie fixe amont (1) caractérisé en ce que un élément formant une lèvre (21) est placé à la base dudit bord de déviation (8) dans la position correspondant à la poussée directe, de manière à assurer une orientation optimale du flux sans rupture, ni perturbations sur la paroi externe de la veine de flux secondaire (15) et en ce que ladite lèvre (21) est associée, d'une part, à des moyens articulés de fixation (22-25) sur ladite partie fixe amont (1) et, d'autre part, à des moyens de liaison (26-29) auxdits moyens de commande (7a) des déplacements de la partie mobile (2) de l'inverseur, de manière à écarter, lorsque l'inverseur de poussée se trouve en position d'inversion, ladite lèvre (21) dudit bord de déviation (8) qui assure ainsi le profil aérodynamique optimal de veine du flux inversé (15a).

2. Inverseur de poussée selon la revendication 1 dans lequel ladite lèvre (21) est portée par deux supports mobiles (22) en forme de levier dont l'extrémité est articulée respectivement sur un support fixe (24) qui est lui-même fixé sur le cadre avant (6) de la partie fixe amont (1) d'inverseur.

3. Inverseur de poussée selon l'une des revendications 1 ou 2 dans lequel ladite lèvre (21) est solidaire de deux leviers (26), chacun relié par une bielle articulée (30) à un pivot (32) solidaire du vérin (7a) de commande des déplacements de la partie mobile de l'inverseur.

4. Inverseur de poussée selon l'une quelconque des revendications 1 à 3 dans lequel les lèvres (21) sont en nombre égal à celui des portes basculantes (7) constituant les obstacles de déviation de la partie mobile de l'inverseur, chacune des lèvres (21) étant reliée respectivement au vérin (7a) de commande des déplacements de la porte (7) correspondante.

## Patentansprüche

1. Schubumkehrvorrichtung für ein Zweistrom-Turboluftstrahltriebwerk mit einem stromaufwärtigen Teil (1), dessen radial innerer Teil in stromabwärtiger Richtung von einem Umlenkrand (8) verlängert wird, und einem beweglichen Teil mit Umlenkhindernissen, insbesondere in Form von schwenkbaren Klappen (7), die sich in ihrer geschlossenen Stellung in die Außenwand des ringförmigen Kanals der Sekundärströmung einfügen und in ihrer ausgefahrenen Stellung die Sekundärströmung umlenken, wobei jede der Klappen (7) mit Antriebsmitteln, z.B. einem Antriebszylinder (7a), zur Steuerung ihrer Bewegungen verbunden ist, und wobei der genannte Umlenkrand insbesondere unter einem der Verbindung zwischen einer äußeren Platte (4) und einer inneren Platte (5) des festen stromaufwärtigen Teils (1) dienenden vorderen Rahmen (6) befestigt ist, **dadurch gekennzeichnet,** daß an der Basis des Umlenkrands (8) ein eine Lippe (21) bildendes Element so angeordnet ist, daß es in der dem Direktschub entsprechenden Position eine unterbrechungs- und störungsfreie optimale Ausrichtung der Strömung an der Außenwand des Strömungskanal der Sekundärströmung (15) gewährleistet, und daß diese Lippe (21) einerseits mit gelenkig angeordneten Mitteln (22 bis 25) zur Befestigung an dem festen stromaufwärtigen Teil (1) und andererseits mit Mitteln (26 bis 29) zur Verbindung mit den genannten Antriebsmitteln (7a) zur Steuerung der Bewegungen des beweglichen Teils (2) der Schubumkehrvorrichtung verbunden ist, so daß die Lippe (21) dann, wenn die Schubumkehrvorrichtung sich in der der Schubumkehr entsprechenden Position befindet, von dem Umlenkrand (8) entfernt wird, der auf diese Weise das optimale aerodynamische Profil für den Strömungskanal der umgelenkten Strömung (15a) sicherstellt.

2. Schubumkehrvorrichtung nach Anspruch 1, bei der die Lippe (21) von zwei beweglichen hebelförmigen Trägern (22) gehalten ist, deren Ende jeweils mit einem festen Träger (24) gelenkig verbunden ist, der seinerseits an dem vorderen Rahmen (6) des stromaufwärtigen festen Teils (1) der Schubumkehrvorrichtung befestigt ist.

3. Schubumkehrvorrichtung nach einem der Ansprüche 1 oder 2, bei der die Lippe (21) fest mit zwei Hebeln (26) verbunden ist, deren jeder über eine gelenkig angeordnete Pleuelstange (30) mit einem Zapfen (32) verbunden ist, der mit dem Antriebszylinder (7a) zur Steuerung der Bewegungen des beweglichen Teils der Schubumkehrvorrichtung fest verbunden ist.

4. Schubumkehrvorrichtung nach einem der Ansprüche 1 bis 3, bei der die Zahl der Lippen (21) ebenso groß ist wie die Zahl der schwenkbaren Klappen (7), die die Umlenkhindernisse des beweglichen Teils der Schubumkehrvorrichtung bilden, wobei jede der Lippen (21) jeweils mit dem Antriebszylinder (7a) zur Steuerung der Bewegungen der betreffenden Klappe (7) verbunden ist.

## Claims

1. Thrust reverser for a bypass turbojet engine comprising an upstream part (1) of which the radially inner part is extended towards the rear by a flow-diverting lip (8) and a movable part comprising diverting obstacles, notably pivoting shutters (7) capable, in the closed position, of fitting into the outer wall of the annular duct of the secondary airflow and, in the deployed position, of diverting the said secondary airflow, each shutter (7) being associated with a means of controlling the movements, such as a ram (7a), the said flow-diverting lip being notably fixed under a front frame (6) connecting an outer panel (4) and an inner panel (5) of the said fixed upstream part (1) characterised in that an element forming a lip (21) is placed at the base of the said flow-diverting lip (8) in the position corresponding to direct thrust, in such a way as to ensure that the airflow takes an optimal direction, without breakaway or disturbance along the outer wall of the duct of the said secondary airflow (15) and in that the said lip (21) is associated, on the one hand with an articulated means of attachment (22-25) to the said fixed upstream part (1) and, on the other, to a means of linkage (26-29) to the said means (7a) of controlling the movements of the movable part (2) of the thrust reverser, in such manner that when the thrust reverser is in the reverse thrust position the said lip (21) is distanced from the said flow-diverting lip (8) which thus ensures that the reversed flow (15a) has an optimal aerodynamic profile.

2. Thrust reverser in accordance with Claim 1 in which the said lip (21) is carried on two movable supports (22) in the form of a lever whose end is articulated respectively on a fixed support (24) itself fixed to the front frame (6) of the fixed upstream part (1) of the thrust reverser.

3. Thrust reverser in accordance with either of Claims 1 or 2 in which the said lip (21) is rigidly attached to two levers (26), each connected by an articulated link (30) to a pivot (32) fixed to the ram (7a) controlling the movements of the movable part of the thrust reverser.

4. Thrust reverser in accordance with any of Claims 1 to 3 in which the lips (21) are equal in number to that of the pivoting shutters (7) constituting the diverting obstacles of the movable part of the thrust reverser, each of the lips (21) being respectively linked to the ram (7a) controlling the movements of the corresponding shutter (7).

FIG:1

FIG: 2

FIG: 3

FIG : 4

EP 0 338 869 B1

FIG : 5